# DEMANDE DE BREVET EUROPEEN

(11) **EP 0 753 727 A1**
(43) Date de publication de la demande: **15.01.1997**
(21) Numéro de dépôt: 96401441.9
(22) Date de dépôt: 28.06.1996
(51) Int. Cl.: G01L 3/14, G01L 5/00, B60J 7/057, E05F 15/00

(54) **Dispositif de mesure de couple, notamment pour un motoréducteur d'activation d'un organe fonctionnel d'un véhicule automobile**

(30) Priorité: 11.07.1995 FR 9508388
(71) Demandeur: ROCKWELL LIGHT VEHICLE SYSTEMS - FRANCE, en abrégé: ROCKWELL LVS - FRANCE, 92082 Paris La Defense 2 (FR)
(72) Inventeur: Nomerange, Hervé-Marcel, 14000 Caen (FR); Lemperrière, Marie-Anne, 14000 Caen (FR)
(74) Mandataire: Habasque, Etienne Joel Jean-François

(57) **Abrégé**

Ce dispositif de mesure de couple notamment pour un motoréducteur d'activation d'un organe fonctionnel d'un véhicule automobile, du type comportant un moteur électrique (1) à aimants permanents dont l'arbre de sortie (2) est relié à une vis sans fin (3) associée à une roue (4) elle-même reliée à travers des moyens formant amortisseur déformable élastiquement (5) à un organe de sortie (6) du motoréducteur, est caractérisé en ce qu'il comporte des moyens (9,10) de détermination des déplacements angulaires de la roue et de l'organe de sortie, reliés à des moyens (8) de détermination du couple résistant appliqué sur cet organe de sortie à partir du déplacement angulaire relatif entre la roue et l'organe.

## Description

La présente invention concerne un dispositif de mesure de couple notamment pour un motoréducteur d'activation d'un organe fonctionnel d'un véhicule automobile.

Plus particulièrement, la présente invention concerne un dispositif de mesure de couple pour un motoréducteur du type comportant un moteur électrique à aimants permanents dont l'arbre de sortie est relié à une vis sans fin associée à une roue, elle-même reliée à travers des moyens formant amortisseur déformable élastiquement, à un organe de sortie du motoréducteur.

De tels dispositifs sont par exemple utilisés dans les ensembles de lève-vitres ou de toits ouvrants électriques de véhicules automobiles.

On sait que l'un des problèmes les plus importants concernant le fonctionnement de ces ensembles est leur sécurité de fonctionnement et en particulier le contrôle du fonctionnement de ceux-ci lorsqu'un objet quelconque est coincé par exemple entre une vitre et le reste d'une porte du véhicule.

Ce fonctionnement peut être contrôlé par exemple à partir de la vitesse de rotation de l'arbre de sortie du moteur d'entraînement de l'ensemble, du courant consommé par celui-ci ou encore du couple résistant appliqué sur l'arbre de sortie de celui-ci.

On connaît en effet des dispositifs de mesure de couple qui sont insérés entre deux portions d'arbre coaxiales d'entraînement reliant un organe menant et un organe mené de ce type d'ensembles.

C'est ainsi par exemple que l'on connaît des dispositifs de mesure de couple qui sont insérés entre deux portions d'arbre reliées à un organe menant, tel qu'un moteur électrique et à un organe mené, tel qu'un mécanisme à roue et vis sans fin de manoeuvre d'un mécanisme de lève-vitre, et qui comportent deux disques disposés en regard l'un de l'autre dans des plans à peu près perpendiculaires à l'axe des portions d'arbre et portant à leur périphérie des moyens de codage de position, reliés chacun à une portion d'arbre et l'un à l'autre par un tampon de matériau élastiquement déformable, tandis que des moyens de détection de position sont disposés en regard des moyens de codage de position des disques.

La sortie de ces moyens de détection de position est reliée à des moyens de détermination de couple par analyse des informations délivrées par ces moyens de détection de position.

On sait également que les moyens de codage de position et les moyens de détection de position correspondants peuvent être formés par des moyens optiques ou magnétiques.

Cependant, la structure de ces dispositifs est telle qu'il est nécessaire de prévoir deux portions d'arbre entre lesquelles sont insérés ceux-ci.

Or, ceci peut présenter un certain nombre d'inconvénients.

Le but de l'invention est donc de résoudre ces problèmes.

A cet effet, l'invention a pour objet un dispositif de mesure de couple notamment pour un motoréducteur d'activation d'un organe fonctionnel d'un véhicule automobile, du type comportant un moteur électrique à aimants permanents dont l'arbre de sortie est relié à une vis sans fin associée à une roue elle-même reliée à travers des moyens formant amortisseur déformable élastiquement, à un organe de sortie du motoréducteur, caractérisé en ce qu'il comporte des moyens de détermination des déplacements angulaires de la roue et de l'organe de sortie, reliés à des moyens de détermination du couple résistant appliqué sur cet organe de sortie à partir du déplacement angulaire relatif entre la roue et l'organe.

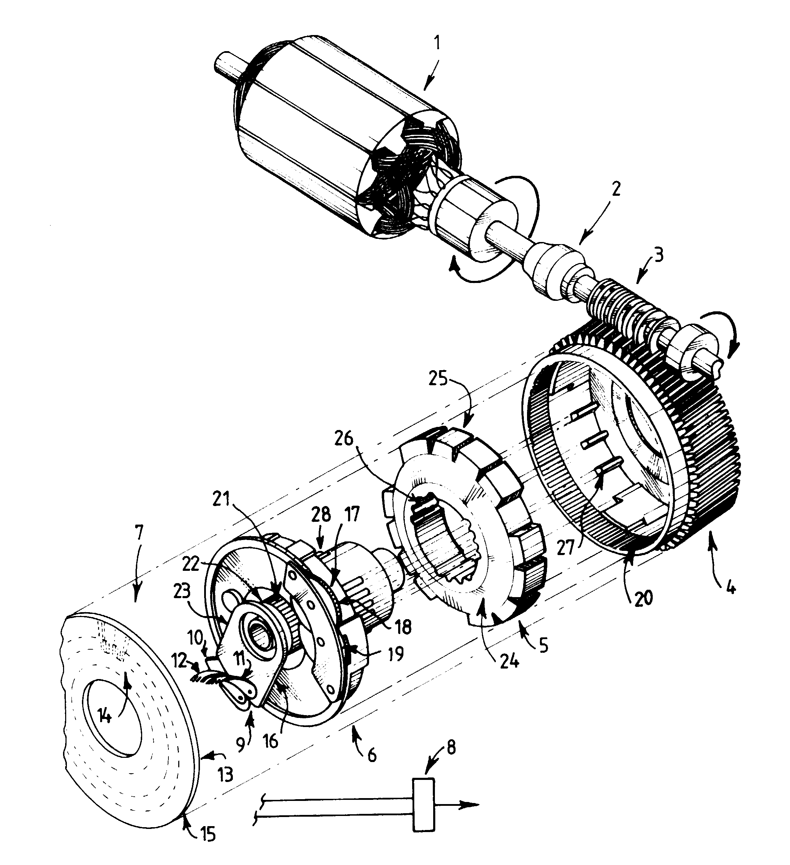

L'invention sera mieux comprise à la lecture de la description qui va suivre, donnée uniquement à titre d'exemple et faite en se référant au dessin annexé qui représente une vue partielle en perspective éclatée d'un dispositif de mesure de couple selon l'invention.

On reconnaît en effet sur cette figure, un dispositif de mesure de couple notamment pour un motoréducteur d'activation d'un organe fonctionnel de véhicule automobile, tel qu'un lève-vitre.

Ce dispositif comporte un moteur électrique à aimants permanents désignés par la référence générale 1 sur cette figure, dont l'arbre de sortie 2 est relié à une vis sans fin 3 associée à une roue 4.

Cette roue 4 est elle-même reliée à travers des moyens formant amortisseur déformable élastiquement 5 à un organe de sortie du motoréducteur désigné par la référence générale 6.

Selon l'invention, ce dispositif comporte des moyens de détermination des déplacements angulaires de la roue et de l'organe de sortie, reliés à des moyens de détermination du couple résistant appliqué sur cet organe de sortie à partir du déplacement angulaire relatif entre la roue et l'organe.

Ces moyens de détermination des déplacements angulaires de la roue et de l'organe de sortie sont désignés par la référence générale 7 sur cette figure, tandis que les moyens de détermination du couple résistant sont désignés par la référence générale 8.

Avantageusement, les moyens de détermination des déplacements angulaires comprennent des codeurs angulaires de position associés l'un à la roue 4 et l'autre à l'organe de sortie 6.

Le codeur angulaire de position associé à la roue 4 est désigné par la référence générale 9 sur cette figure, tandis que le codeur angulaire de position associé à l'organe de sortie 6 est désigné par la référence générale 10.

En fait, et selon le mode de réalisation représenté sur cette figure, les codeurs de position peuvent comporter des frotteurs associés à des pistes codées d'un disque fixé sur le reste du dispositif.

C'est ainsi par exemple que le codeur 9 comporte un premier frotteur 11, tandis que le codeur 10 comporte un second frotteur 12.

Ces frotteurs sont associés à des pistes respectivement 13 et 14 d'un disque de codage de position 15 fixé sur le reste du dispositif.

On conçoit alors qu'une première partie de chaque codeur, c'est-à-dire par exemple un frotteur, est reliée à un élément correspondant, roue ou organe de sortie, et qu'une seconde partie de chacun de ceux-ci, c'est-à-dire par exemple une piste codée, est reliée à une partie fixe du dispositif.

Par ailleurs, la première partie du codeur 10 est fixé directement sur l'organe de sortie 6, cette première partie étant par exemple le frotteur 12 de ce codeur, tandis que la première partie de l'autre codeur 9, c'est à dire par exemple le frotteur 11 de ce codeur, est montée rotative sur cet organe de sortie 6 par l'intermédiaire par exemple d'une pièce de montage désignée par la référence générale 16 sur cette figure, des moyens d'entraînement en rotation disposés sur cet organe de sortie 6, étant interposés entre cette pièce de montage 16 et la roue 4.

Sur cette figure, ces moyens d'entraînement en rotation sont désignés par la référence générale 17 et comprennent par exemple deux pignons 18 et 19 engrénant l'un avec l'autre et dont l'un, 18, est associé à une portion dentée interne 20 de la roue 4 et l'autre 19, est associée à une portion dentée 21 de la pièce de montage 16.

En fait, ces moyens d'entraînement en rotation constituent des moyens d'amplification de mouvement permettant d'amplifier le déplacement angulaire relatif entre la roue et l'organe de sortie afin d'améliorer la précision du dispositif de mesure.

La pièce de montage 16 comporte comme on peut le voir sur cette figure, un moyeu 22 monté rotatif sur l'organe de sortie 6 et muni de la portion dentée 21 coopérant avec le pignon 19 et un bras radial 23 à l'extrémité duquel est fixé le frotteur 11 du codeur 9.

Les moyens formant amortisseur 5 comprennent quant à eux une rondelle élastique par exemple de section trapézoïdale, désignée par la référence générale 24 sur cette figure, sur les bords interne et externe de laquelle sont prévues des bagues d'accouplement, respectivement 25 et 26, adaptées pour coopérer avec des moyens complémentaires respectivement 27, de la roue 4 et 28, de l'organe de sortie 6 du motoréducteur.

On conçoit alors que le fonctionnement de ce dispositif est le suivant.

Le moteur électrique 1 entraîne par l'intermédiaire de son arbre de sortie 2, la vis sans fin 3 qui fait tourner la roue 4.

Cette roue fait tourner par l'intermédiaire des moyens d'amortissement 5 et des moyens d'accouplement complémentaires correspondants, l'organe de sortie 6.

Si aucun couple résistant n'est appliqué sur cet organe de sortie, l'organe formant amortisseur ne se déforme pas ou se déforme très peu et les frotteurs des codeurs 9 et 10 se déplacent de manière correspondante.

Par contre, si un couple résistant est appliqué sur cet organe de sortie 6, les moyens formant amortisseur 5 se déforment, de sorte qu'un déplacement angulaire relatif se produit entre l'organe de sortie 6 et la roue 4.

Le frotteur 12 du codeur 10 étant relié à cet organe de sortie 6 et la pièce de montage 16 de support du frotteur 11 du codeur 9 étant associée à la roue 4 par l'intermédiaire des moyens d'amplification de mouvement 17, la déformation des moyens formant amortisseur se traduit par un déplacement angulaire de la pièce de montage 16 et du frotteur 11, associées à la roue 4, par rapport au frotteur 12, associé à l'organe de sortie 6.

Ceci se traduit alors par des informations de sortie de ces codeurs de position qui sont décalées et représentatives du déplacement angulaire entre la roue et l'organe de sortie, de sorte que les moyens 8 de détermination du couple résistant peuvent détecter ce décalage à partir de ces informations et déterminer ce couple à partir de ce décalage.

On notera que ces moyens comprennent tout organe de détermination connu dans l'état de la technique.

Ceci permet alors de détecter un couple résistant appliqué sur le motoréducteur et d'agir sur le fonctionnement de celui-ci pour assurer sa sécurité de fonctionnement par exemple en inversant le sens de rotation de celui-ci pour éviter tout risque de blessure d'un utilisateur dont par exemple la main serait coincée entre une vitre et le reste d'une portière du véhicule.

On notera bien entendu que différents modes de réalisation de ce dispositif peuvent être envisagés et que les moyens de détermination des déplacements angulaires de la roue et de l'organe de sortie peuvent être formés par des moyens autres que des codeurs angulaires à frotteurs et pistes codées correspondantes, comme par exemple par des moyens optiques, magnétiques ou autres.

Le degré d'amplification de déplacement de l'un des frotteurs dépend du rapport de transmission de la chaine de moyens d'engrènement prévus entre la roue et la pièce de montage et celui-ci peut bien entendu être réglé.

## Revendications

1. Dispositif de mesure de couple notamment pour un motoréducteur d'activation d'un organe fonctionnel d'un véhicule automobile, du type comportant un moteur électrique (1) à aimants permanents dont l'arbre de sortie (2) est relié à une vis sans fin (3) associée à une roue (4) elle-même reliée à travers des moyens formant amortisseur déformable élastiquement (5) à un organe de sortie (6) du motoréducteur, caractérisé en ce qu'il comporte des moyens (9,10) de détermination des déplacements angulaires de la roue et de l'organe de sortie, reliés à des moyens (8) de détermination du couple résistant appliqué sur cet organe de sortie à partir du déplacement angulaire relatif entre la roue et l'organe.

2. Dispositif selon la revendication 1, caractérisé en ce que les moyens de détermination des déplacements comprennent des codeurs angulaires de position (9,10), associés l'un à la roue (4) et l'autre à l'organe de sortie (6).

3. Dispositif selon la revendication 2, caractérisé en ce que chaque codeur comporte une première partie (11,12) reliée à l'élément correspondant, roue ou organe de sortie, et une seconde partie (13,14) reliée à une portion fixe (15) du dispositif.

4. Dispositif selon la revendication 3, caractérisé en ce que la première partie (12) de l'un des codeurs (10) est fixée sur l'organe de sortie (6), tandis que la première partie (11) de l'autre codeur (9) est fixée sur une pièce de montage (16) montée rotative sur l'organe de sortie (6) et en ce que des moyens d'entraînement en rotation (17) sont disposés sur l'organe de sortie (6) et interposés entre la roue (4) et cette pièce de montage (16).

5. Dispositif selon la revendication 4, caractérisé en ce que les moyens d'entraînement (17) comprennent des moyens d'amplification de mouvement (18,19).

6. Dispositif selon la revendication 4 ou 5, caractérisé en ce que la première partie (11) de l'autre codeur (9) est fixée à l'extrémité d'un bras radial de la pièce de montage (16) montée rotative sur l'organe de sortie (6).

7. Dispositif selon la revendication 6, caractérisé en ce que les moyens d'amplification de mouvement comprennent deux pignons (18,19) dont l'un coopère avec une portion dentée (20) de la roue et l'autre coopère avec une portion dentée (21) de la pièce de montage (16).

8. Dispositif selon l'une quelconque des revendicatins 3 à 7, caractérisé en ce que la première partie de chaque codeur comporte un frotteur (11,12), tandis que la seconde partie de chacun de ceux-ci comporte une piste codée (13,14) d'un disque de codage de position (15).

9. Dispositif selon l'une quelconque des revendications précédentes, caractérisé en ce que les moyens formant amortisseur comprennent une rondelle élastique (24) de section trapézoïdale sur les bords interne et externe de laquelle sont prévues des bagues (25,26) d'accouplement respectivement à la roue et à l'organe de sortie.
